# EUROPEAN PATENT APPLICATION

(11) **EP 3 196 743 A1**
(43) Date of publication of application: **26.07.2017**
(21) Application number: 14884404.6
(22) Date of filing: 14.11.2014
(51) Int. Cl.: G06F 3/048

(54) **WINDOWS WINDOW OBJECT IDENTIFICATION METHOD AND DEVICE**

(30) Priority: 19.09.2014 CN 201410483798
(71) Applicant: ZTE Corporation, Shenzhen, Guangdong 518057 (CN)
(72) Inventor: JIANG, Lei, Shenzhen Guangdong 518057 (CN); ZHANG, Jian, Shenzhen Guangdong 518057 (CN); PENG, Guangyao, Shenzhen Guangdong 518057 (CN); MEI, Yu, Shenzhen Guangdong 518057 (CN)
(74) Representative: Brevalex
(86) International application number: PCT/CN2014/091167
(87) International publication number: WO 2015/131547

(57) **Abstract**

A Windows window object identification method and device. The method comprises the following steps: information of a selected table entry within a list of objects to be selected is received; a selected object is prompted, according to a corresponding relationship between the selected table entry and an object to be selected. The device comprises: a table entry selection information receiving module, configured to receive information of a selected table entry within a list of objects to be selected; a table entry selection prompting module, configured to prompt a selected object, according to a corresponding relationship between the selected table entry and an object to be selected.

## Description

### TECHNICAL FIELD

The disclosure relates to information management, and in particular to a Windows window object identification method and device.

### BACKGROUND

In the Windows operating system, most programs have windows. Different control objects are on the windows, and they receive and respond to mouse event and keyboard event.

In most cases, the control objects or other objects are visual in an operating window, and an operator is clear about these objects; the operator knows purposes, positions, and other information of the objects.

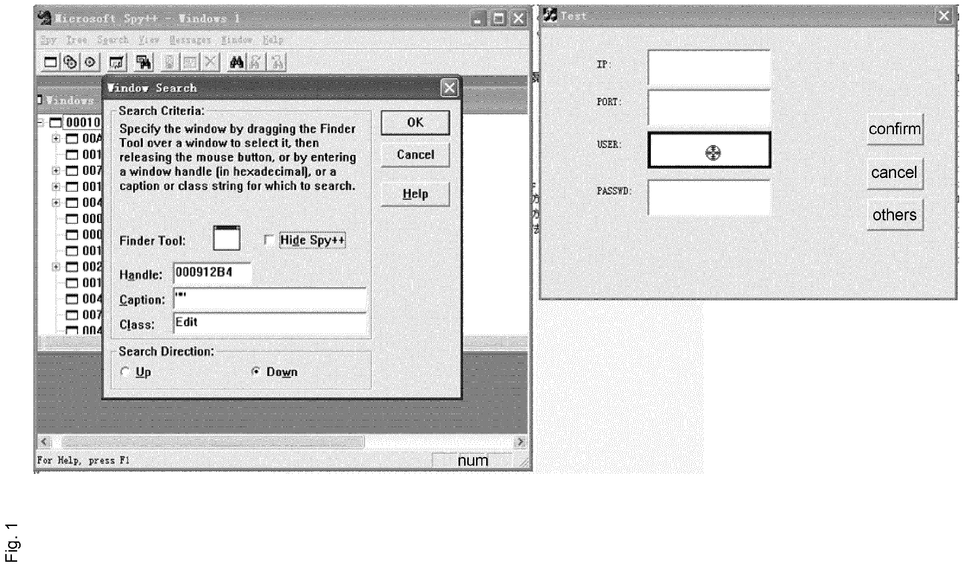

For the window control object, Microsoft provides a spy++ tool which can precisely identify window controls of a target program; an operation interface of the spy++ tool is as shown in Fig. 1, the operator drags a circle cursor to a control on a target window, namely the USER input box, then a bounding rectangle of the control is bolded and lightened, displaying the specific control information. The object identification method of the spy++ tool of Microsoft provided in Fig. 1 belongs to an actively dragging method in which the mouse cursor is located on the target object, the target object located by the cursor can be identified only when it is detected that the cursor moves to the object. In the prior art, the spy++ tool is commonly used to identify the object required to be identified.

### SUMMARY

In view of the above, embodiments of the disclosure provide a Windows window object identification method and device; through the method and device, an operator can accurately search out an object to be searched without dragging a cursor to an area where the object is.

A Windows window object identification method includes the following steps:
information of a selected table entry in a list of objects to be selected is received; and
a selected object is prompted according to a correspondence between the selected table entry and an object to be selected.

In an embodiment, the object to be selected may include all windows displayed when a target program starts, and/or all controls in a selected target window of all the windows.

In an embodiment, the step of prompting the selected object according to the correspondence between the selected table entry and the object to be selected may include that:
the selected object is searched for according to the correspondence between the selected table entry and the object to be selected;
a bounding rectangle of the selected object is calculated; and
the bounding rectangle of the selected object is redrawn and the redrawn bounding rectangle is displayed.

In an embodiment, after the selected object is prompted according to the correspondence between the selected table entry and the object to be selected, the method may further include that:
information to be recorded corresponding to the selected object is received, and a correspondence among the information to be recorded, the selected table entry and the selected object is saved.

In an embodiment, the table entry in the list of objects to be selected may record an ID of the object to be selected and a type of the object to be selected.

A Windows window object identification device includes:
a table entry selection information receiving module, which is arranged to receive the information of the selected table entry in the list of objects to be selected; and
a table entry selection prompting module, which is arranged to prompt the selected object according to the correspondence between the selected table entry and the object to be selected.

In an embodiment, the object to be selected may include all the windows displayed when the target program starts, and/or all the controls in the selected target window of all the windows.

In an embodiment, the prompting module may include:
an object searching unit, which is arranged to search for the selected object according to the correspondence between the selected table entry and the object to be selected;
a bounding rectangle calculating unit, which is arranged to calculate the bounding rectangle of the selected object; and
a bounding rectangle redrawing unit, which is arranged to redraw the bounding rectangle of the selected object and display the redrawn bounding rectangle.

In an embodiment, the device may further include:
an information receiving and saving module, which is arranged to receive the information to be recorded corresponding to the selected object, and save the correspondence among the information to be recorded, the selected table entry and the selected object.

In an embodiment, the table entry in the list of objects to be selected may record the ID of the object to be selected and the type of the object to be selected.

The disclosure also provides a computer program including program instructions, that when executed by a computer, cause the computer to execute the above method.

The disclosure also provides a computer readable storage medium bearing the computer program.

It can be seen from the above that the Windows window object identification method and device provided by the embodiments of the disclosure allow the operator to accurately select the object to be selected without dragging the cursor on the object to be selected. In addition, the Windows window object identification method and device provided by the embodiments of the disclosure allow the operator to obtain basic information of the selected object through information of options in the list of objects to be selected while selecting a certain object, thereby improving the accuracy of object selection as well as increasing the speed of object selection.

### BRIEF DESCRIPTION OF THE DRAWINGS

Fig. 1 is an operation interface of a spy++ tool provided by Microsoft in the related art;
Fig. 2 is a flowchart of a Windows window object identification method according to the disclosure;
Fig. 3 is a schematic diagram of a list of objects and an object to be selected according to the disclosure;
Fig. 4 is a schematic diagram of a list of objects to be selected and a control object in the window of the disclosure; and
Fig. 5 is a structure diagram of a Windows window object identification device according to the disclosure.

### DETAILED DESCRIPTION

For giving an effective implementation solution, the disclosure provides the following embodiments; the embodiments of the disclosure are elaborated in combination with the accompanying drawings of the specification. The embodiments of the disclosure and the characteristics in the embodiments can be combined under the condition of not conflicting.

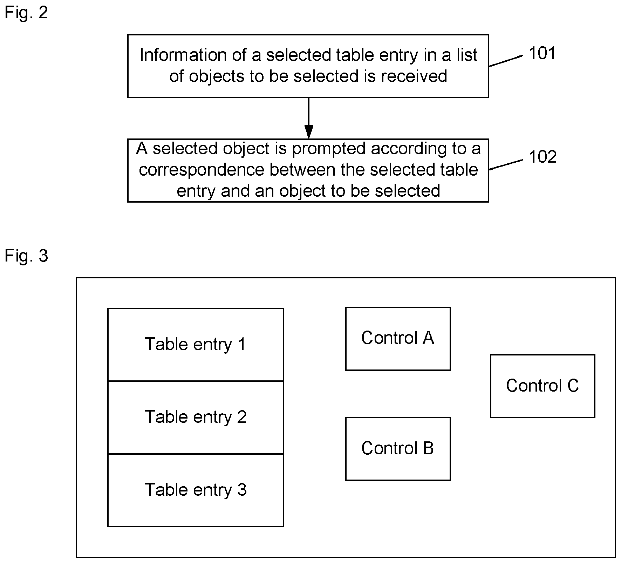

The embodiments of the disclosure first provide a Windows window object identification method, including the following steps as shown in Fig. 2:
Step 101: information of a selected table entry in a list of objects to be selected is received;
   in the step, after an operator selects a table entry in the list of objects to be selected, the information of the table entry selected by the operator is received;
Step 102: a selected object is prompted according to a correspondence between the selected table entry and an object to be selected;
   in the step, according to the correspondence between the table entry selected by the operator and the object to be selected, the object selected by the operator is prompted, so that the operator judges whether to perform the corresponding identification operation to the selected object.

It can be seen from the above that the Windows window object identification method provided by the embodiments of the disclosure enables the operator to select the object corresponding to the table entry by selecting the table entry in the list of objects to be selected, so that the object can be accurately identified without requiring the operator to drag the cursor.

The object to be selected includes all windows displayed when a target program starts, and/or all controls in a selected target window of all the windows.

Referring to Fig. 3, the table entry in the list of objects corresponds to the object to be selected; the table entry can record the information of the object to be selected, such as ID, position coordinate, attribute and name of the object to be selected. The table entry can also be just a serial number. In the embodiment shown in Fig. 3, the object to be selected is a control object in a window; the table entry 1 corresponds to the control A, the table entry 2 corresponds to the control B, and the table entry 3 corresponds to the control C. When the operator selects the table entry 1, the operator is prompted in a set way about the control A is selected.

After knowing the correspondence between the table entry in a list of options and the corresponding control object to be selected, the operator can determine the object to be selected, and establish the correspondence between the control object to be selected and information to be input when an application automatically performs a certain operation, so that the application can input the information to be input in the correct control when automatically performing the operation.

In other embodiments, the object can be a window object. For example, in actual situation, when a part of applications start or run a certain instruction, two windows will be started simultaneously, then it is needed to identify the window objects; each table entry in the list of objects corresponds to a window object; when the operator selects a table entry in the list of objects, the window object selected by the operator is prompted in a set way.

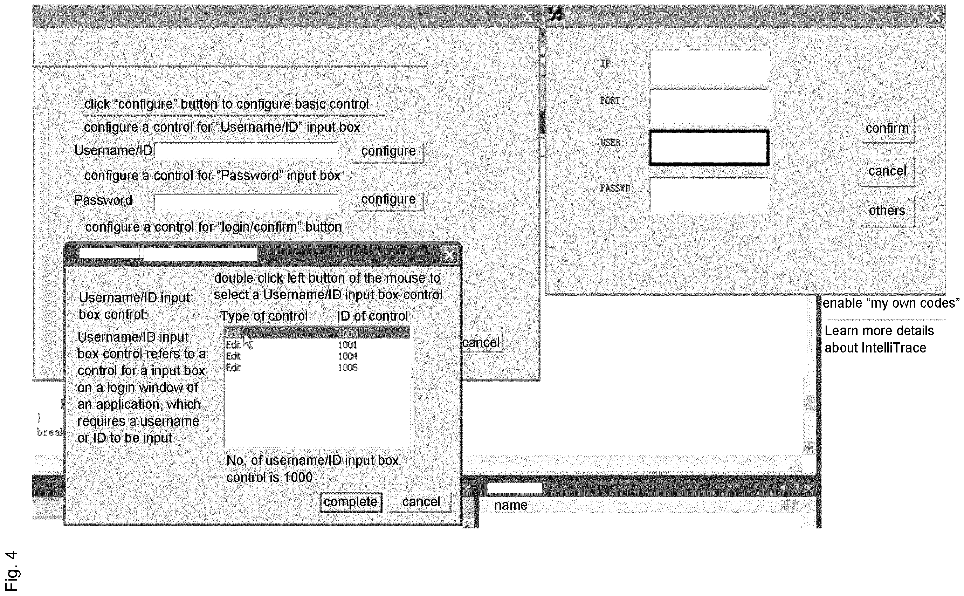

When two windows pop up because an application automatically performs the operation, for example, when the operator logs in a certain application A, a login permission validation window and an application display window pop up; as shown in Fig. 4, the application display window can be a window interface displayed when the application is in a running state; the control object for receiving permission validation information is set in the permission validation window; more specifically, the control object for receiving the permission validation information can be a user name input box or a password input box. Then, for determining the control object for receiving the permission validation information, first it is needed to identify the two windows popping up simultaneously, at this time, the object to be selected is the permission validation window; after the permission validation window is determined, it is needed to determine the control object for receiving the permission validation information in the permission validation window, at this time, the object to be selected is the control object for receiving the permission validation information.

Referring to Fig. 1, in the related art, when the spy++ tool provided by Microsoft is used to identify the control object, the basic function of the control object will be embodied in the text marked beside the object, for example, the control object corresponding to the circle cursor in Fig. 1 is marked as USER, and the control is a blank area, which means user name information can be input in the control object.

In related art, with the development of computer technology, many applications can perform actions like automatic login without control of the operator, so it is very important to configure these applications to make them identify, without control of the operator, an information input box object required by the actions like automatic login. In the early stage of application design, the operator establishes a correspondence between the control object corresponding to the window and the information to be input when the application automatically logs in or performs other automatic operations. When the correspondence between the control object and the information to be input is established, it is very important to fast determine the ID of the control object.

So, in some embodiments of the disclosure, the table entry records the information of the object to be selected, such as the ID, position coordinate, attribute and name of the object to be selected.

When selecting an option in the list of options, the operator can know the specific object corresponding to the option through prompt, and know information of the object corresponding to the option through the content of the option, so that the accuracy of determining the object to be selected by the operator is improved.

In a simpler embodiment, the table entry in the list of objects to be selected includes an ID of the object to be selected and an attribute to be selected, as shown in Fig. 4. If the object to be selected is the control object in the window, a table entry where the control attribute is Edit and the control ID is 1000 is selected, and the table entry corresponds to the control object USER. In the process of dragging the cursor to the area of objects to be selected to select the object to be selected of the prior art, only further clicking the option of viewing object information can the operator know the specific information of the selected object, thereby reducing the speed of selecting the object by the operator; if the operator does not view the specific information of the selected object, but judges the selected object through experience, then the accuracy of selecting the object is reduced virtually.

In the step of prompting the operator about the selected object, the operator can be prompted in a pre-set way, such as sound prompt and light prompt.

In some embodiments of the disclosure, the step of prompting the operator about the selected object according to the correspondence between the table entry selected by the operator and the object to be selected includes that:
the object selected by the operator is searched for according to the correspondence between the table entry selected by the operator and the object to be selected;
the bounding rectangle of the object selected by the operator is calculated; and
the bounding rectangle of the object selected by the operator is redrawn and the redrawn bounding rectangle is displayed.

The step of redrawing the bounding rectangle of the object selected by the operator and displaying the redrawn bounding rectangle may include that: coloured lines are used to redraw the bounding rectangle of the object selected by the operator; or the object selected by the operator is lightened; or colour different from the original colour of the object is used to display the object. Herein, lightening the object selected by the operator means improving the display brightness of the object selected by the operator.

In some embodiments of the disclosure, after the operator is prompted about the selected object according to the correspondence between the table entry selected by the operator and the object to be selected, the method further includes that:
information to be recorded corresponding to the selected object and input by the operator is received, and a correspondence among the information to be recorded, the table entry selected by the operator and the object selected by the operator is saved.

In the above embodiments, when the object is the window object, the information to be recorded includes identification information of the window object. The identification information is used to determine that the window object is the object to be selected.

In the above embodiments, when the object is the control object in the window, the information to be recorded includes identification information of the control object and information to be input during performing a certain operation. The identification information is used to determine that the control object in the window is the object to be selected, and the information is used to be input into the control object, so as to make the application perform an operation.

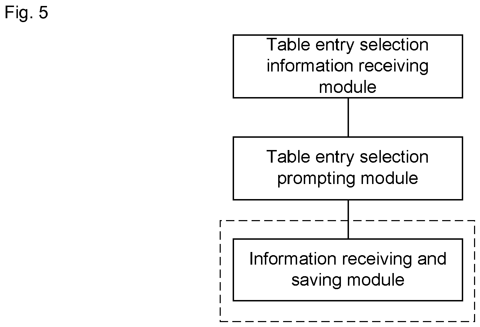

The embodiments of the disclosure also provide a Windows window object identification device, whose structure is shown in Fig. 5, including:
a table entry selection information receiving module, which is arranged to receive the information of the selected table entry in the list of objects to be selected; and
a table entry selection prompting module, which is arranged to prompt the selected object according to the correspondence between the selected table entry and the object to be selected.

It can be seen from above that the Windows window object identification device provided by the embodiments of the disclosure enables the operator to select the window/control object corresponding to the table entry by selecting the table entry in the list of objects to be selected, so that the operator can accurately select a certain object without dragging the cursor to the objects to be selected.

In some embodiments of the disclosure, the object to be selected includes all windows displayed when a target program starts, and/or all controls in a selected target window of all the windows.

In some embodiments of the disclosure, the prompting module includes:
an object searching unit, which is arranged to search for the object selected by the operator according to the correspondence between the table entry selected by the operator and the object to be selected;
a bounding rectangle calculating unit, which is arranged to calculate the bounding rectangle of the object selected by the operator; and
a bounding rectangle redrawing unit, which is arranged to redraw the bounding rectangle of the object selected by the operator and display the redrawn bounding rectangle.

In some embodiments of the disclosure, referring to Fig. 5, the device further includes:
an information receiving and saving module, which is arranged to receive the information to be recorded input by the operator and corresponding to the object selected by the operator, and save the correspondence among the information to be recorded, the table entry selected by the operator and the object selected by the operator.

In some embodiments of the disclosure, the table entry in the list of objects to be selected records the ID of the object to be selected and the type of the object to be selected.

To sum up, the Windows window object identification method and device provided by the disclosure allow the operator to accurately select the object to be selected without dragging the cursor on the object to be selected. In addition, the Windows window object identification method and device provided by the disclosure allow the operator to obtain basic information of the selected object through information of options in the list of objects to be selected while selecting a certain object, thereby improving the accuracy of object selection as well as increasing the speed of object selection.

It should be understood that the multiple embodiments described here are only used for illustrating but not limiting the disclosure. The embodiments of the application and the characteristics in the embodiments can be combined under the condition of not conflicting.

Those skilled in the art can make various modifications and variations to the disclosure without departing from its spirit and scope. If these modifications and variations of the disclosure belong to the scope of the claims of the disclosure and its equivalent technology, the disclosure is intended to include these modifications and variations.

Those ordinary skill in the art may understand that all or part of the steps in the embodiments can be implemented by flows of a computer program; the computer program may be stored in computer readable storage medium; when the computer program is executed on corresponding hardware platforms (such as a system, a piece of equipment, a device and a component), one of the steps or a combination of the steps in the embodiment of the method is included.

Optionally, all or part of the steps of the embodiments may also be implemented by using integrated circuits. These steps can be separately made into integrated circuit modules, or multiple modules or steps of them can be implemented by being made into a single integrated circuit module. In such a manner, the disclosure is not limited to any particular combination of hardware and software.

The above devices/functional modules/functional units in the embodiments can be implemented by a general-purpose computing device, and they can be centralized in a single computing device or distributed on a network composed of multiple computing devices.

When being implemented in form of software function module and sold or used as an independent product, the above devices/functional modules/functional units in the embodiments may also be stored in a computer-readable storage medium. The computer-readable storage medium may be an ROM, a magnetic disk or a compact disk.

Any change or replacement those skilled in the art think easily in the technical scope disclosed by the disclosure should fall within the scope of protection of the disclosure. Thus, the scope of protection of the disclosure is subject to the scope of protection of the claims.

### INDUSTRIAL APPLICABILITY

The disclosure allows the operator to accurately select the object to be selected without dragging the cursor on the objects to the selected, and allows the operator to obtain basic information of the selected object through information of options in the list of objects to be selected while selecting a certain object, thereby improving the accuracy of object selection as well as increasing the speed of object selection.

## Claims

1. A Windows window object identification method, comprising:
receiving information of a selected table entry in a list of objects to be selected; and
prompting a selected object according to a correspondence between the selected table entry and an object to be selected.

2. The method according to claim 1, wherein the object to be selected comprises all windows displayed when a target program starts, and/or all controls in a selected target window of all the windows.

3. The method according to claim 1, wherein the step of prompting the selected object according to the correspondence between the selected table entry and the object to be selected comprises:
searching for the selected object according to the correspondence between the selected table entry and the object to be selected;
calculating a bounding rectangle of the selected object; and
redrawing the bounding rectangle of the selected object and displaying the redrawn bounding rectangle.

4. The method according to claim 1, further comprising: after prompting the selected object according to the correspondence between the selected table entry and the object to be selected,
receiving information to be recorded corresponding to the selected object, and saving a correspondence among the information to be recorded, the selected table entry and the selected object.

5. The method according to claim 1, wherein the table entry in the list of objects to be selected records an ID of the object to be selected and a type of the object to be selected.

6. A Windows window object identification device, comprising:
a table entry selection information receiving module, which is arranged to receive information of a selected table entry in a list of objects to be selected; and
a table entry selection prompting module, which is arranged to prompt a selected object according to a correspondence between the selected table entry and an object to be selected.

7. The device according to claim 6, wherein the object to be selected comprises all windows displayed when a target program starts, and/or all controls in a selected target window of all the windows.

8. The device according to claim 6, wherein the prompting module comprises:
an object searching unit, which is arranged to search for the selected object according to the correspondence between the selected table entry and the object to be selected;
a bounding rectangle calculating unit, which is arranged to calculate a bounding rectangle of the selected object; and
a bounding rectangle redrawing unit, which is arranged to redraw the bounding rectangle of the selected object and display the redrawn bounding rectangle.

9. The device according to claim 6, further comprising:
an information receiving and saving module, which is arranged to receive information to be recorded corresponding to the selected object, and save a correspondence among the information to be recorded, the selected table entry and the selected object.

10. The device according to claim 6, wherein the table entry in the list of objects to be selected records an ID of the object to be selected and a type of the object to be selected.

11. A computer program, comprising program instructions, that when executed by a computer, cause the computer to execute a method according to any one of claims 1 to 5.

12. A computer readable storage medium bearing a computer program according to claim 11.
